# EUROPÄISCHE PATENTSCHRIFT

(11) **EP 3 890 194 B1**
(45) Veröffentlichungstag und Bekanntmachung des Hinweises auf die Patenterteilung: **11.10.2023**
(21) Anmeldenummer: 21160919.3
(22) Anmeldetag: 05.03.2021
(51) Int. Cl.: H04B 3/23, H04L 25/08, B66F 9/24

(54) **FLURFÖRDERZEUG MIT EINER ETHERNET-KOMMUNIKATIONSVORRICHTUNG UND VERFAHREN ZUM BETREIBEN DERSELBEN**
INDUSTRIAL TRUCK WITH AN ETHERNET COMMUNICATION DEVICE AND METHOD FOR OPERATING THE SAME
CHARIOT DE MANUTENTION DOTÉ D'UN DISPOSITIF DE COMMUNICATION ETHERNET ET SON PROCÉDÉ DE FONCTIONNEMENT

(30) Priorität: 25.03.2020 DE 102020108213
(43) Veröffentlichungstag der Anmeldung: 06.10.2021
(73) Patentinhaber: Jungheinrich Aktiengesellschaft, 22047 Hamburg (DE)
(72) Erfinder: ROLINK, Jérôme, 23843 Bad Oldesloe (DE); PROCHNOW, Thorge, 22415 Hamburg (DE); DOHRMANN, Lars, 22391 Hamburg (DE); PAUTZ, Alexander, 22846 Norderstedt (DE); WINKEL, Steffen, 22850 Norderstedt (DE); HARTWIG, Jobst, 25421 Pinneberg (DE)
(74) Vertreter: Seemann & Partner Patentanwälte mbB

(56) Entgegenhaltungen:
- US-A1- 2016 034 847
- US-B1- 9 716 529
- Stefan Luber: "Was ist 802.3cg (10Base-T1)?", IP Insider, 9. Januar 2020 (2020-01-09), Seiten 1-5, XP055790782, Gefunden im Internet: URL:https://www.ip-insider.de/was-ist-8023 cg-10base-t1-a-890235/ [gefunden am 2021-03-29]

## Beschreibung

Die Erfindung betrifft ein Flurförderzeug mit einer Ethernet-Kommunikationsvorrichtung, die zumindest ein erstes Netzwerkgerät und ein über eine Datenleitung mit diesem verbundenes zweites Netzwerkgerät umfasst, wobei die Datenleitung ein Ethernet-Kabel mit einer einzigen verdrillten Doppelader ist, und wobei das erste Netzwerkgerät eine erste Sende-Empfangseinheit mit einer ersten Echokompensationseinheit und der zweite Netzwerkteilnehmer eine zweite Sende-Empfangseinheit mit einer zweiten Echokompensationseinheit umfasst, wobei eine erste Sendeeinheit der ersten Sende-Empfangseinheit dazu eingerichtet ist, Daten über die Datenleitung an einen zweiten Empfänger der zweiten Sende-Empfangseinheit zu senden und wobei eine zweite Sendeeinheit der zweiten Sende-Empfangseinheit dazu eingerichtet ist, Daten über die Datenleitung an einen ersten Empfänger der ersten Sende-Empfangseinheit zu senden.

Ferner betrifft die Erfindung ein Verfahren zum Betreiben einer Ethernet-Kommunikationsvorrichtung in einem Flurförderzeug, die zumindest ein erstes Netzwerkgerät und ein über eine Datenleitung mit diesem verbundenes zweites Netzwerkgerät umfasst, wobei die Datenleitung ein Ethernet-Kabel mit einer einzigen verdrillten Doppelader ist, und wobei das erste Netzwerkgerät eine erste Sende-Empfangseinheit mit einer ersten Echokompensationseinheit und der zweite Netzwerkteilnehmer eine zweite Sende-Empfangseinheit mit einer zweiten Echokompensationseinheit umfasst, wobei eine erste Sendeeinheit der ersten Sende-Empfangseinheit Daten über die Datenleitung an einen zweiten Empfänger der zweiten Sende-Empfangseinheit sendet und eine zweite Sendeeinheit der zweiten Sende-Empfangseinheit Daten über die Datenleitung an einen ersten Empfänger der ersten Sende-Empfangseinheit sendet.

Ethernet-Netzwerke mit einer einzigen verdrillten Doppelleitung im Automobilbereich werden üblicherweise als "Automotive-Ethernet" bezeichnet. Sie dienen dazu, den steigenden Bedarf an Hochgeschwindigkeits-Datenübertragung in Fahrzeugen zu bedienen. Große Datenmengen müssen beispielsweise beim Einsatz hochauflösender Videokameras mit hohen Bildwiederholraten und großer Farbtiefe übertragen werden. Auch die steigende Anzahl an Aktuatoren und Sensoren innerhalb eines Fahrzeugs, welche ebenso wie Kameras in der Regel mit einer zentralen Steuereinheit kommunizieren, erhöht die Datenlast innerhalb des Fahrzeugs. Die derzeit in Fahrzeugen eingesetzte und bewährte Kommunikationsschnittstelle CAN ist bezüglich ihrer verfügbaren Bandbreite größtenteils ausgereizt, so dass Automotive-Ethernet sich als ein möglicher neuer Standard für die Datenkommunikation in Kraftfahrzeugen anbietet.

Seit 2016 ist Automotive-Ethernet im IEEE-Standard 802.3bw spezifiziert. Demgemäß sind Datenübertragungsraten von bis zu 100 Mbit/s über unabgeschirmte Ethernet-Kabel mit einer einzigen verdrillten Doppelader (Single-Twisted-Pair-Ethernet, STPE) vorgesehen. Diese Datenübertragungsraten werden bei Verwendung von STPE bis zu einer maximalen Übertragungslänge von 15 m erreicht, sofern die ebenfalls in dem Standard geforderten Bit-Fehlerrate (Bit Error Rate, BET) von kleiner 10^-10 (zehn hoch minus zehn) eingehalten werden soll.

Aus DE 10 2018 213 441 A1 ist ein Ethernet-Kommunikationsnetzwerk bekannt, welches in großen Maschinen, beispielsweise Landmaschinen, zum Einsatz kommt. Das Netzwerk umfasst einen Netzwerk-Repeater, um die bei solchen großen Geräten erforderlichen Übertragungslängen zwischen Sender und Empfänger von mehr als 15 m zu ermöglichen. Für automobile Anwendungen im Pkw-Bereich ist das Entfernungslimit von 15 m in der Regel nicht störend, d.h. die maximale Übertragungslänge ist ausreichend. Weitere relevante Informationen werden in den folgenden Dokumenten aus dem Stand der Technik beschrieben: US 2016/034847 A1 und US 9 716 529 B1.

Die bei Übertragungslängen von mehr als 15 m eingesetzten aktiven Netzwerkkomponenten, beispielsweise Repeater, verursachen zusätzliche Kosten für das Ethernet-Kommunikationsnetzwerk. Außerdem muss für diese aktiven Komponenten ein geeigneter Platz eingeplant werden und die Komponente muss dort montiert werden. Unvermeidbar weisen diese zusätzlichen aktiven Komponenten eine gewisse Ausfallwahrscheinlichkeit auf und führen zudem zu einem erhöhten Test- und Zertifizierungsaufwand. Da es sich bei einem Repeater um ein in die Datenleitung integriertes, d.h. diese unterbrechendes, Bauteil handelt, erhöht sich die Latenzzeit der Datenübertragung. Außerdem erfordern aktive Komponenten stets einen größeren Verkabelungsaufwand sowie zusätzliche Steckverbindungen.

Eine Alternative, um Datenübertragungslängen von mehr als 15 m zu erreichen, wäre der Einsatz von abgeschirmten Kabeln mit zwei oder vier Doppeladern (Twisted Pair), welche zudem beispielsweise nach dem Standard IEEE802.3u bzw. IEEE802.3ab betrieben werden könnten. Die gegenüber einem STPE-Kabel größere Anzahl von Adern vergrößert jedoch den Kabeldurchmesser und sorgt für steigende Kosten bei der Verkabelung. Durch die Abschirmung sind die Kabel steifer, d.h. weniger flexibel, und somit schwieriger zu verlegen, was im Automobilbereich ein wichtiger Aspekt ist. Außerdem sind Datenleitungen im Automobilbereich vielfach zyklischen Wechselbelastungen, und zwar über eine lange Zeit, d.h. für viele Bewegungsvorgänge, ausgesetzt. Solche Belastungen beeinflussen langfristig die Qualität der Schirmung oder können gar zum Bruch und somit zum Versagen der Schirmung oder auch der gesamten Datenleitung führen. Während die genannten Kabeltypen und Datenübertragungsstandards für die Verwendung mit starrer Leitungsverlegung unkritisch und sehr geeignet sind, erweisen sie sich für den Fahrzeugbereich als eher ungeeignet.

Es ist eine Aufgabe der Erfindung, ein Flurförderzeug mit einer Ethernet-Kommunikationsvorrichtung sowie ein Verfahren zum Betreiben einer Ethernet-Kommunikationsvorrichtung in einem Flurförderzeug anzugeben, wobei es mit der Ethernet-Kommunikationsvorrichtung möglich sein soll, große Datenübertragungslängen zu realisieren und gleichzeitig den technischen Aufwand so gering wie möglich zu halten.

Die Aufgabe wird gelöst durch ein Flurförderzeug mit einer Ethernet-Kommunikationseinheit, die zumindest ein erstes Netzwerkgerät und ein über eine Datenleitung mit diesem verbundenes zweites Netzwerkgerät umfasst, wobei die Datenleitung ein Ethernet-Kabel mit einer einzigen verdrillten Doppelader (Single-Twisted-Pair-Ethernet, STPE) ist, und wobei das erste Netzwerkgerät eine erste Sende-Empfangseinheit (engl. Transceiver) mit einer ersten Echokompensationseinheit (engl. Echo-Canceler) und der zweite Netzwerkteilnehmer eine zweite Sende-Empfangseinheit mit einer zweiten Echokompensationseinheit umfasst, wobei eine erste Sendeeinheit der ersten Sende-Empfangseinheit dazu eingerichtet ist, Daten über die Datenleitung an einen zweiten Empfänger der zweiten Sende-Empfangseinheit zu senden und wobei eine zweite Sendeeinheit der zweiten Sende-Empfangseinheit dazu eingerichtet ist, Daten über die Datenleitung an einen ersten Empfänger der ersten Sende-Empfangseinheit zu senden, wobei das Flurförderzeug dadurch fortgebildet ist, dass die erste Echokompensationseinheit einen ersten Speicher umfasst, der dazu eingerichtet ist, ein erstes Datensignal der von der ersten Sendeeinheit an den zweiten Empfänger gesendeten Daten zum Zweck der Echokompensation für länger als die Dauer eines Echointervalls zu speichern, wobei das Echointervall größer als 150 ns ist.

Die Ethernet-Kommunikationseinheit gemäß Aspekten der Erfindung ist für eine Datenübertragungsgeschwindigkeit von 100 Mbit/s eingerichtet. Ferner ist die Datenleitung ein nicht abgeschirmtes Ethernet-Kabel mit einer einzigen verdrillten Doppelader.

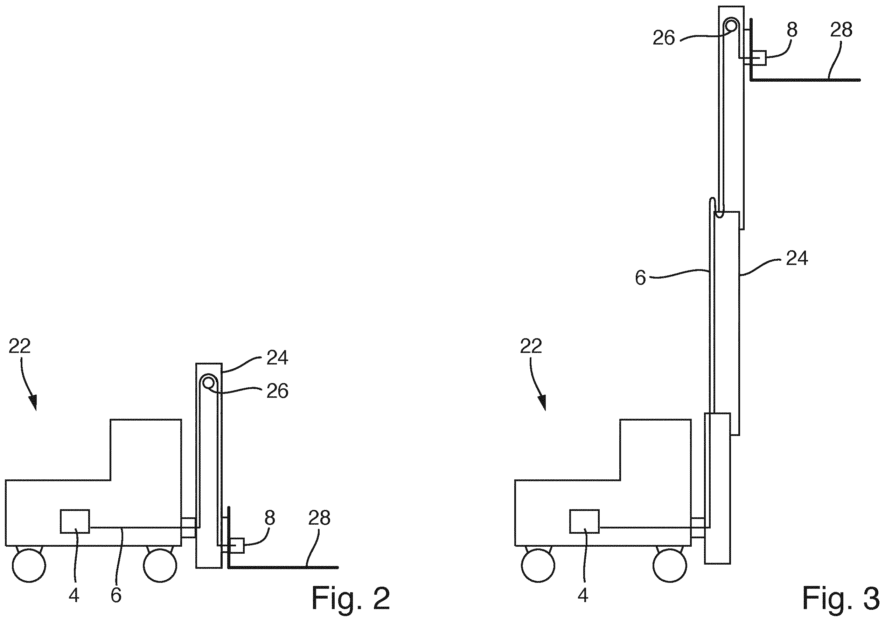

Ethernet-Kommunikationsvorrichtungen im Automobilbereich, das sogenannte Automotive-Ethernet ist auf Übertragungslängen von 15 m begrenzt. Diese Grenze der Übertragungslänge hat sich allgemein in der Fachwelt etabliert und durchgesetzt. Dies geht beispielsweise aus der bereits eingangs zitierten DE 10 2018 213 441 A1, Absatz [0028], hervor. Auch in dem Dokument: IEEE 100Base-T1, "System Implementation Specification", Version 1, 08.12.2017, ist auf Seite 23, in Fig. 2 in Verbindung mit der darunter stehenden Tabelle 6 gezeigt, dass stets eine Gesamtlänge des Übertragungsweges von maximal 15 m eingehalten wird.

In Automotive-Ethernet-Datennetzen umfassen der Ethernet-Controller auf der physikalischen Ebene (Physical Layer, PHY) stets eine Echokompensationseinheit. Diese wirkt als eine Art Kurzzeitgedächtnis, in dem das Signal der von dem Ethernet-Controller selbst gesendeten Daten für eine kurze Zeit zwischengespeichert wird. Kommt im Empfänger desselben Ethernet-Controllers, also einer solchen Sende-Empfangseinheit, ein reflektiertes und gedämpftes Signal zurück, beispielsweise aufgrund von Reflektionen in der Datenleitung an Steckverbindungen oder durch Fehlanpassungen der Impedanz, so ist die Echokompensationseinheit durch Vergleich mit dem eigenen gespeicherten Datensignal in der Lage, diese Reflektionen von dem Nutzsignal zu trennen. Dies erfolgt beispielsweise durch eine mathematische Operation (z.B. eine Auslöschung). Durch diese Echokompensation kann der Signal-zu-Rausch-Abstand (engl. Signal-to-Noise Ratio) verbessert werden. Das ganze System wird unempfindlicher gegenüber Fehlanpassungen. Ziel ist stets, so wie im Standard festgelegt, die Bit-Fehlerrate (Bit Error Rate, BET) kleiner als 10^-10 (zehn hoch minus zehn) zu halten.

Aufgrund des in der Fachwelt etablierten Wertes für die maximale Datenübertragungslänge von 15 m, haben sich in den verfügbaren Mikrocontrollern Speichergrößen für die Echo-Kompensationseinheit etabliert, welche auf diese Datenübertragungslänge angepasst sind. Typischerweise sind die Speicher so groß, dass sie das gesendete Signal für die Dauer einer Laufzeit des Signals auf der doppelten maximalen Strecke von 15 m speichern können. Die doppelte Laufzeit ergibt sich aus der Signallaufzeit bis zur maximal entfernten Störung plus der Laufzeit des reflektierten Signals. Bei dem kommerziell verfügbaren Ethernet-Controller NXP TJA1100 ist beispielsweise in der Echokompensationseinheit ein Speicher für 80 ns vorgesehen.

Zur Überwindung des technischen Vorurteils, dass die Datenübertragungslänge im Automotive-Ethernet auf 15 m begrenzt ist, wird die Ethernet-Kommunikationsvorrichtung des Flurförderzeugs mit einer Echokompensationseinheit versehen, deren Speicher dazu eingerichtet ist, ein von der Sendeeinheit gesendetes Datensignal für länger als 150 ns zu speichern. Es wurde erfindungsgemäß erkannt, dass zur Überwindung der etablierten Grenze für die maximale Datenübertragungslänge von 15 m eine entsprechend auf die größere Datenübertragungslänge angepasste Echokompensation entscheidend und ausreichend ist. Es ist mit einer solchen Ethernet-Kommunikationsvorrichtung möglich, unter Verwendung eines STPE-Kabels zuverlässige Datenverbindungen mit der geforderten BER auch für Datenübertragungslängen von mehr als 15 m zu realisieren.

Die Größe des Speichers in der Ethernet-Kommunikationsvorrichtung kann schwerlich als Datenmenge, beispielsweise in Byte angegeben werden. Die Größe des für die entsprechende Pufferzeit erforderlichen Speichers hängt nämlich von vielen Faktoren ab, beispielsweise von der verwendeten Datenübertragungsrate. Die Größe des Speichers in Bit oder Byte ist für die technische Funktion der Echokompensation in der Ethernet-Kommunikationsvorrichtung des Flurförderzeugs nicht entscheidend. Entscheidend ist vielmehr, dass der Speicher so groß gewählt ist, dass er in der Lage ist, das gesendete Signal für zumindest die doppelte Signallaufzeit der maximal vorgesehenen Übertragungslänge zu speichern, um eine entsprechende Echokompensation vornehmen zu können.

Vorteilhaft setzt die Ethernet-Kommunikationsvorrichtung des Flurförderzeugs ein STPE-Kabel ein, welches so flexibel ist, dass es beispielsweise über Umlenkrollen, Schleppketten oder dergleichen beweglich geführt werden kann. Es ist ferner nicht erforderlich, auch bei Übertragungslängen von mehr als 15 m aktive Netzwerkkomponenten, wie beispielsweise Repeater oder Switches, in die Datenleitung zu integrieren. Dies reduziert die Herstellungskosten, den Wartungs- und Zertifizierungsaufwand und verbessert außerdem die Zuverlässigkeit der Kommunikationsvorrichtung. Bei Verwendung eines STPE-Kabels können außerdem Umlenkrollen mit geringem Radius eingesetzt werden. Beispielsweise ist gemäß einer Ausführungsform die Datenleitung über Umlenkrollen geführt, welche einen Durchmesser von weniger als 60 mm haben. Der kleine Leitungsquerschnitt des STPE-Kabels schützt dieses vor hohen mechanischen Belastungen und vermeidet so eine Beschädigung. Die Verwendung eines STPE-Kabels in Verbindung mit einer Echokompensationseinheit mit ausreichend großem Speicher ermöglicht es, bei Flurförderzeugen eine derartige Kommunikationsverbindung zu verwenden.

Hubgerüste von Flurförderzeugen sind einerseits sehr höhenvariabel ausgeführt mit beispielsweise ca. 5 m Höhe im eingefahrenen und 12 m Höhe im maximal ausgefahrenen Zustand. Die Distanz zwischen dem Fahrerarbeitsplatz und der Lastgabel kann somit ohne weiteres 15 m und mehr betragen. Zudem sind Hubgerüste von Flurförderzeugen sehr kompakt aufgebaut, um eine platzsparende Bauweise und gute Rundumsicht zu ermöglichen. Daher ist der Platz für die Verlegung von Kabeln und Schläuchen entlang des Hubgerüsts äußerst begrenzt. Da die Kabel und Schläuche zudem über Umlenkrollen geführt und häufig bewegt werden, ist die Verwendung von steifen Kabeln mit großen Durchmessern zu vermeiden. Auch die Verwendung von aktiven Komponenten, wie beispielsweise Repeatern oder dgl., entlang der Trasse, in der die Kabel über das Hubgerüst geführt werden, ist aus Platzgründen nicht möglich. Während die technischen Randbedingungen einer Verwendung aktiver Bauteile und/oder Kabel größeren Durchmessers im Bereich Automotive oder Landtechnik nicht entgegenstehen (siehe bspw. DE 10 2018 213 441 A1) führen die obengenannten Einschränkungen dazu, dass eine Datenübertragung entsprechender Geschwindigkeit entlang eines Hubgerüsts entsprechender Größe erst durch die Ethernet-Kommunikationsvorrichtung gemäß Aspekten der Erfindung überhaupt möglich wird.

Gemäß einer weiteren Ausführungsform ist die Datenleitung zwischen der ersten Sende-Empfangseinheit und der zweiten Sende-Empfangseinheit in zumindest zwei Teilstücke unterteilt, welche über eine Steckverbindung miteinander verbunden sind. Mit anderen Worten ist also zumindest eine Steckverbindung in die Datenleitung integriert. Die Aufteilung der Datenleitung in zumindest zwei Teilsegmente vereinfacht die Verlegung der Datenleitung in oder an dem Flurförderzeug. Beispielsweise ist es möglich, ein erstes Teilstück der Datenleitung bei der Montage eines ersten Moduls oder Bauteils des Flurförderzeugs zu verlegen, beispielsweise an oder entlang des Hubgerüsts des Flurförderzeugs. Dieses erste Modul des Flurförderzeugs wird in einem sich anschließenden Herstellungsschritt mit einem zweiten Modul oder Bauteil des Flurförderzeugs verbunden oder an diesem montiert. Bei dem zweiten Modul handelt es sich beispielsweise um ein Chassis des Flurförderzeugs oder dessen Fahrerkabine. In gleicher Weise wie in dem ersten Modul ist auch in oder an dem zweiten Modul des Flurförderzeugs bereits das zweite Teilstück der Datenleitung vormontiert. Bei der Montage des ersten Moduls des Flurförderzeugs an dem zweiten Modul werden die beiden Teilstücke der Datenleitung einfach über eine Steckverbindung miteinander verbunden.

Ein weiterer Vorteil des segmentweisen Aufbaus der Datenleitung ist die Tatsache, dass im Fall einer Reparatur, beispielsweise zur Behebung eines Kabelbruchs oder dergleichen, nur das defekte Teilstück der Datenleitung ausgetauscht werden muss.

Das Flurförderzeug mit der Ethernet-Kommunikationsvorrichtung gemäß Aspekten der Erfindung ist alternativen Lösungen überlegen. Für große Datenübertragungsstrecken von mehr als 15 m wäre theoretisch der Einsatz von Glasfasern möglich, welche jedoch teuer und außerdem empfindlich sind. Auch ein Kommunikationsnetzwerk, welches Koaxialleitungen einsetzt, wäre denkbar. Jedoch sind auch diese Kabel empfindlich, da sie technisch notwendig eine Abschirmung benötigen. Bei Wechselbelastungen können Abschirmungen in Kabeln auf die Dauer leicht beschädigt werden, was zum Ausfall des Kabels führt. Eine weitere Alternative wäre eine Funkverbindung, welche jedoch üblicherweise große Latenzen und eine hohe Störempfindlichkeit aufweist.

Der Einsatz des Ethernet-Kommunikationsnetzwerks in einem Flurförderzeug ist besonders vorteilhaft, da bei diesen Fahrzeugen, anders als beispielsweise in Pkws, die maximale Datenübertragungslänge von 15 m leicht überschritten wird.

Gemäß einer vorteilhaften Ausführungsform ist das Flurförderzeug dadurch fortgebildet, dass die zweite Echokompensationseinheit einen zweiten Speicher umfasst, der dazu eingerichtet ist, ein zweites Datensignal der von der zweiten Sendeeinheit an den ersten Empfänger gesendeten Daten zum Zweck der Echokompensation für mehr als die Dauer des Echointervalls zu speichern.

Gemäß dieser Ausführungsform sind beide Sende-Empfangseinheiten der Ethernet-Kommunikationsvorrichtung zum Senden bzw. Empfangen über Datenübertragungslängen von mehr als 15 m geeignet. Dies ermöglicht die bidirektionale Kommunikation zwischen diesen beiden Einheiten.

Gemäß einer weiteren vorteilhaften Ausführungsform ist vorgesehen, dass das Echointervall größer als 160 ns, insbesondere größer als 170 ns, ferner insbesondere größer als 180 ns, ist. Ferner ist insbesondere vorgesehen, dass das Echointervall
größer als 160 ns und kleiner als 380 ns,
größer als 170 ns und kleiner als 380 ns,
größer als 180 ns und kleiner als 380 ns,
größer als 160 ns und kleiner als 350 ns,
größer als 160 ns und kleiner als 330 ns,
größer als 160 ns und kleiner als 310 ns,
größer als 170 ns und kleiner als 350 ns, oder
größer als 180 ns und kleiner als 330 ns ist.

Die angegebenen Bereiche und Grenzwerte haben sich in der Praxis als vorteilhaft herausgestellt. Es konnten durch den Einsatz der Echokompensationseinheiten mit Speichern, die in der Lage sind, Datensignale für die angegebenen Zeiten zu speichern, Datenraten mit der gewünschten Bildfehlerrate erreicht werden.

Gemäß einer weiteren Ausführungsform ist das Flurförderzeug dadurch fortgebildet, dass das erste Netzwerkgerät und das zweite Netzwerkgerät direkt über die Datenleitung miteinander verbunden sind und die Datenleitung durch keine aktiven Netzwerkkomponenten unterbrochen ist, insbesondere keinen Repeater umfasst.

Die genannte Ausführungsform schließt nicht aus, dass die Datenleitung aus mehreren Segmenten besteht, welche insbesondere über Steckverbindungen miteinander verbunden sind. Der Verzicht auf aktive Netzwerkkomponenten ermöglicht es, ein kostengünstiges und robustes Netzwerk für die Datenkommunikation in dem Flurförderzeug aufzubauen.

Gemäß der Erfindung ist vorgesehen, dass das Ethernet-Kabel ein unabgeschirmtes Kabel ist. Die Verwendung von unabgeschirmten Kabeln, also solchen ohne elektrische Abschirmung, ist sowohl aus Kostengründen als auch im Hinblick auf die Robustheit dieser Kabel vorteilhaft. Abschirmungen in Kabeln neigen insbesondere bei zyklischen Dauerbelastungen dazu, zu versagen, was aufwendige und mitunter teure Reparaturen der Kabel erfordert. Außerdem haben unabgeschirmte Kabel einen geringeren Querschnitt und sind sehr flexibel, so dass ihre Verlegung einfach und kostengünstig erfolgen kann.

Gemäß einer weiteren Ausführungsform ist vorgesehen, dass eine Länge der Datenleitung größer als 17 m und insbesondere kleiner als 31 m ist. Für Datenübertragungslängen zwischen 17 m und 31 m konnten bei entsprechender Echokompensation auch für STPE-Datenleitungen, welche aus mehreren Segmenten zusammengesetzt sind, die geforderten Bildfehlerraten erreicht werden. Es hat sich somit als vorteilhaft herausgestellt, in diesem Bereich zu arbeiten.

Gemäß einer weiteren vorteilhaften Ausführungsform ist vorgesehen, dass die Datenleitung entlang eines beweglichen Hubgerüsts des Flurförderzeugs geführt ist. Insbesondere ist vorgesehen, dass das erste Netzwerkgerät eine in einem Chassis des Flurförderzeugs vorhandene Steuereinheit ist oder von der Steuereinheit umfasst ist und das zweite Netzwerkgerät eine Einheit ist oder von einer Einheit umfasst ist, die in oder an einer an dem Hubgerüst befestigten Gabel oder in oder an einem an dem Hubgerüst befestigten Gabelträger angeordnet ist, wobei das zweite Netzwerkgerät insbesondere mit einer in oder an der Gabel oder in oder an dem Gabelträger angeordneten Kamera verbunden ist oder von der Kamera umfasst ist.

In modernen Flurförderzeugen ist die Kommunikation zwischen Einheiten, welche sich im Bereich des Gabelträgers, der Gabel oder Hubgabel befinden, beispielsweise einer an der Gabel oder dem Gabelträger vorhandenen oder in die Gabel oder den Gabelträger integrierten Kamera und einer üblicherweise im Chassis des Flurförderzeugs angeordneten Steuereinheit, von besonderer Bedeutung. Hochauflösende Kamerabilder sollen möglichst in Echtzeit und mit hohen Bildwiederholungsraten auf einem dem Benutzer des Flurförderzeugs bereitgestellten Monitor verfügbar sein. Zu diesem Zweck ist die kabelgebundene Übertragung der Daten, wobei die Datenleitung entlang des beweglichen Hubgerüsts geführt wird, besonders vorteilhaft.

Die Aufgabe wird außerdem gelöst durch ein Verfahren zum Betreiben einer Ethernet-Kommunikationsvorrichtung in einem Flurförderzeug, die zumindest ein erstes Netzwerkgerät und ein über eine Datenleitung mit diesem verbundenes zweites Netzwerkgerät umfasst, wobei die Datenleitung ein Ethernet-Kabel mit einer einzigen verdrillten Doppelader ist, und wobei das erste Netzwerkgerät eine erste Sende-Empfangseinheit mit einer ersten Echokompensationseinheit und der zweite Netzwerkteilnehmer eine zweite Sende-Empfangseinheit mit einer zweiten Echokompensationseinheit umfasst, wobei
eine erste Sendeeinheit der ersten Sende-Empfangseinheit Daten über die Datenleitung an einen zweiten Empfänger der zweiten Sende-Empfangseinheit sendet und
eine zweite Sendeeinheit der zweiten Sende-Empfangseinheit Daten über die Datenleitung an einen ersten Empfänger der ersten Sende-Empfangseinheit sendet. Vorteilhaft ist dieses Verfahren dadurch fortgebildet, dass
die erste Echokompensationseinheit einen ersten Speicher umfasst, der ein erstes Datensignal der von der ersten Sendeeinheit an den zweiten Empfänger gesendeten Daten zum Zweck der Echokompensation speichert, wobei
die erste Echokompensationseinheit das Datensignal für länger als die Dauer eines Echointervalls speichert und das Echointervall größer als 150 ns ist.

Auf das Verfahren zum Betreiben der Ethernet-Kommunikationsvorrichtung in dem Flurförderzeug treffen gleiche oder ähnliche Vorteile, so wie sie bereits im Hinblick auf das Flurförderzeug selbst erwähnt wurden, zu. Diese sollen nicht wiederholt werden.

Das Verfahren ist vorteilhaft dadurch fortgebildet, dass die zweite Echokompensationseinheit einen zweiten Speicher umfasst, der ein zweites Datensignal der von der zweiten Sendeeinheit an den ersten Empfänger gesendeten Daten zum Zweck der Echokompensation für mehr als die Dauer des Echointervalls speichert.

Ferner ist das Verfahren dadurch fortgebildet, dass das Echointervall größer als 160 ns, insbesondere größer als 170 ns, ferner insbesondere größer als 180 ns, ist.

Insbesondere ist ferner vorgesehen, dass das Echointervall
größer als 160 ns und kleiner als 380 ns,
größer als 170 ns und kleiner als 380 ns,
größer als 180 ns und kleiner als 380 ns,
größer als 160 ns und kleiner als 350 ns,
größer als 160 ns und kleiner als 330 ns,
größer als 160 ns und kleiner als 310 ns,
größer als 170 ns und kleiner als 350 ns, oder
größer als 180 ns und kleiner als 330 ns ist.

Die genannten Intervalle haben sich als vorteilhaft herausgestellt. Im Übrigen wird auf die bereits oben in Bezug auf das Flurförderzeug genannten Argumente verwiesen.

Das Verfahren ist ferner insbesondere dadurch fortgebildet, dass die Daten von dem ersten Netzwerkgerät direkt zu dem zweiten Netzwerkgerät über die Datenleitung versendet werden und die über die Datenleitung kommunizierten Daten keine aktiven Netzwerkkomponenten durchlaufen, insbesondere keinen Repeater durchlaufen.

Gemäß der Erfindung ist das Verfahren dadurch gekennzeichnet, dass die Daten über ein unabgeschirmtes Ethernet-Kabel übertragen werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein schematisches und vereinfachtes Blockschaltbild einer Ethernet-Kommunikationsvorrichtung in einem Flurförderzeug,
- Fig. 2 und 3: ein Flurförderzeug mit einer Ethernet-Kommunikationsvorrichtung, deren Datenleitung entlang eines
- Fig. 4: Hubgerüsts des Flurförderzeugs verläuft und ein weiteres schematisches und stark vereinfachtes Blockschaltbild einer Ethernet-Kommunikationsvorrichtung in einem Flurförderzeug.

In den Zeichnungen sind jeweils gleiche oder gleichartige Elemente und/oder Teile mit denselben Bezugsziffern versehen, so dass von einer erneuten Vorstellung jeweils abgesehen wird.

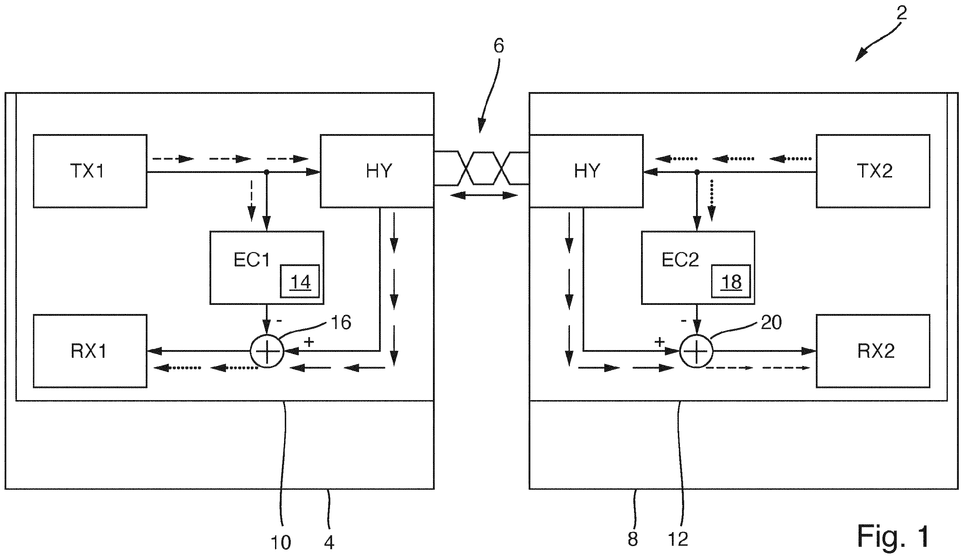

Fig. 1 zeigt eine Ethernet-Kommunikationsvorrichtung 2 eines Flurförderzeugs 22 in einem stark vereinfachten schematischen Blockschaltbild. Das Blockschaltbild zeigt die physikalische Ebene des Netzwerks. Die Ethernet-Kommunikationsvorrichtung 2 umfasst ein erstes Netzwerkgerät 4, welches über eine Datenleitung 6 mit einem zweiten Netzwerkgerät 8 verbunden ist. Die Datenleitung 6 ist ein Ethernetkabel mit einer einzigen verdrillten Doppelader, ein sogenanntes Single Twisted Pair Ethernet-Kabel oder auch STPE-Kabel. Das STPE-Kabel ist außerdem nicht abgeschirmt. Eine Länge der Datenleitung 6, also des STPE-Kabels, liegt beispielsweise zwischen 17 m und 31 m, in jedem Fall ist die Datenleitung länger als 15 m.

Das erste Netzwerkgerät 4 umfasst eine erste Sende-Empfangseinheit 10, die eine erste Echokompensationseinheit EC1 umfasst. Das zweite Netzwerkgerät 8 umfasst eine zweite Sende-Empfangseinheit 12, die eine zweite Echokompensationseinheit EC2 umfasst. Die erste Sende-Empfangseinheit 10 umfasst ferner eine erste Sendeeinheit TX1, die Daten über die Datenleitung 6 an einen zweiten Empfänger RX2 der zweiten Sende-Empfangseinheit 12 sendet. Die zweite Sende-Empfangseinheit 12 umfasst eine zweite Sendeeinheit TX2, die Daten über die Datenleitung 6 an den von der ersten Sende-Empfangseinheit 10 umfassten ersten Empfänger RX1 sendet. Dementsprechend empfängt der zweite Empfänger RX2 der zweiten Sende-Empfangseinheit 12 Daten von der ersten Sendeeinheit TX1 der ersten Sende-Empfangseinheit 10 und der erste Empfänger RX1 der ersten Sende-Empfangseinheit 10 empfängt Daten von der zweiten Sendeeinheit TX2 der zweiten Sende-Empfangseinheit 12.

In der dargestellten Ethernet-Kommunikationsvorrichtung 2 findet außerdem eine Echokompensation durch die erste und die zweite Echokompensationseinheit EC1, EC2 statt. Zu diesem Zweck werden die von der ersten Sendeeinheit TX1 gesendeten Daten, welche mit gestrichelten Pfeilen dargestellt sind, nicht nur dem Hybridadapter HY, der eine Schnittstelle zu dem STPE-Kabel der Datenleitung 6 bereitstellt und die Kommunikation über die Datenleitung 6 zu dem zweiten Netzwerkgerät 8 bzw. dem Hybridadapter HY dieses Netzwerkgeräts herstellt, sondern auch der ersten Echokompensationseinheit EC1 zur Verfügung gestellt. Die erste Echokompensationseinheit EC1 umfasst einen ersten Speicher 14, der das von der ersten Sendeeinheit TX1 gesendete Datensignal zum Zweck der Echokompensation für mehr als 150 ns (150 Nanosekunden) speichert. Empfängerseitig wird der über den Hybridadapter HY empfangene Datenstrom, welcher mit Pfeilen in durchgezogener Linie dargestellt ist, an dem ersten Mixer 16 zum Beispiel durch Auslöschung überlagert, so dass die durch Reflexionen in der Datenleitung 6 vorhandenen Anteile des gesendeten Signals von dem empfangenen Signal, welches von der zweiten Sendeeinheit TX2 der zweiten Sende-Empfangseinheit 12 gesendet wurde, und mit Pfeilen in punktierter Linie dargestellt ist, getrennt werden kann. Dieses Signal kann dem ersten Empfänger RX1 bereitgestellt werden. In gleicher Weise umfasst auch die zweite Sende-Empfangseinheit 12 eine zweite Echokompensationseinheit EC2. Diese umfasst einen zweiten Speicher 18, der dazu geeignet ist, das von der zweiten Sendeeinheit TX2 gesendete Datensignal für mehr als 150 ns zwischenzuspeichern. Dieses Signal wird in dem zweiten Mixer 20, beispielsweise durch Auslöschung, mit dem über die Datenleitung 6 empfangenen Signal gemischt, so dass dem zweiten Empfänger das von der ersten Sendeeinheit TX1 gesendete Datensignal bereitgestellt werden kann.

Die Echokompensationseinheiten EC1, EC2 verbessern das Signal-Rausch-Verhältnis der über die Datenleitung 6 übertragenen Daten. Die Laufzeit der Datensignale auf der Datenleitung beträgt typischerweise zwischen 5 und 6 Nanosekunden pro Meter. Die zu korrigierenden Echosignale treffen mit einer Verzögerung an der sendenden Einheit ein, welche der doppelten Weglänge des Abstands zu der Störung von der sendenden Einheit entspricht. Es muss also das gesendete Signal für die Laufzeit des Datensignals, die einer Übertragungslänge von mehr als 15 m entspricht, zwischengespeichert werden, um sicher Echoreflexionen, welche diese Entfernung von der sendenden Einheit haben, kompensieren zu können.

Die Speicherkapazität des ersten und zweiten Speichers 14, 18, welche erforderlich ist, um die Datensignale für die geforderten Dauern zu speichern, ist abhängig von der verwendeten Datenrate und den verwendeten Übertragungsprotokollen. Eine direkte Speichergröße in Bit und Byte lässt sich aus diesem Grund nur im speziellen Anwendungsfall, nicht jedoch allgemein, angeben. Der erste und der zweite Speicher 14, 18 der ersten bzw. zweiten Echokompensationseinheit EC1, EC2 sind ausgelegt, die jeweils von der zugehörigen Sendeeinheit TX1, TX2 gesendeten Daten für mehr als 150 ns, insbesondere für mehr als 160 ns, ferner insbesondere für mehr als 170 ns, und ferner insbesondere für mehr als 180 ns, zu speichern. Eine maximale Größe des erforderlichen Speichers lässt sich anhand von Intervallen der erforderlichen Speicherzeit bestimmen. Insbesondere sind der erste und der zweite Speicher 14, 18 so ausgelegt, dass sie die jeweils gesendeten Daten für die Dauer eines Echointervalls speichern können, welches
größer als 160 ns und kleiner als 380 ns ist, insbesondere
größer als 170 ns und kleiner als 380 ns ist, ferner insbesondere
größer als 180 ns und kleiner als 380 ns ist, ferner insbesondere
größer als 160 ns und kleiner als 350 ns ist, ferner insbesondere
größer als 160 ns und kleiner als 330 ns ist, ferner insbesondere
größer als 160 ns und kleiner als 310 ns ist, ferner insbesondere
größer als 170 ns und kleiner als 350 ns ist, ferner insbesondere
größer als 180 ns und kleiner als 330 ns ist.

Das erste Netzwerkgerät 4 und das zweite Netzwerkgerät 8 sind über die Datenleitung 6 direkt miteinander verbunden. Dies bedeutet, dass die Datenleitung 6 nicht durch aktive Netzwerkkomponenten, wie beispielsweise Repeater oder Switches, unterbrochen ist.

Fig. 2 zeigt ein Flurförderzeug 22 in einer schematischen und vereinfachten Darstellung. Das Flurförderzeug 22 umfasst eine Ethernet-Kommunikationsvorrichtung 2 mit einem ersten Netzwerkgerät 4 und einem zweiten Netzwerkgerät 8, welche über die Datenleitung 6 miteinander verbunden sind. Die Datenleitung 6 ist entlang des Hubgerüsts 24 verlegt. Damit auch im ausgefahrenen Zustand des Hubgerüsts 24, den die schematische und vereinfachte Darstellung des Flurförderzeugs 22 von Fig. 3 zeigt, eine Datenverbindung zwischen dem ersten Netzwerkgerät 4 und dem zweiten Netzwerkgerät 8 hergestellt ist, ist die Datenleitung 6 flexibel an dem Hubgerüst 24 verlegt und beispielsweise mittels Umlenkrollen 26 geführt. Das erste Netzwerkgerät 4 ist beispielhaft im Chassis des Flurförderzeugs 22 angeordnet und beispielsweise als Teil eines Steuergeräts oder einer zentralen Steuerungseinheit des Flurförderzeugs ausgebildet. Das zweite Netzwerkgerät 8 ist beispielhaft an einer Gabel 28 des Flurförderzeugs 22 angeordnet und umfasst beispielsweise eine hochauflösende Kamera oder dergleichen. Das zweite Netzwerkgerät 8, also beispielsweise eine Kamera, kann ebenso in oder an einem Gabelträger angeordnet sein.

Mit der gezeigten Ethernet-Kommunikationsvorrichtung 2 des Flurförderzeugs 22 können beispielsweise hochauflösende Kameraaufnahmen sicher und zuverlässig übertragen werden.

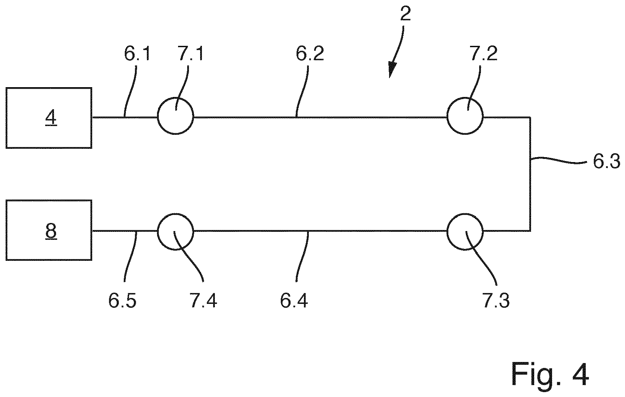

Fig. 4 zeigt eine weitere schematisch vereinfachte Darstellung der Ethernet-Kommunikationsvorrichtung 2. Zwischen dem ersten Netzwerkgerät 4 und dem zweiten Netzwerkgerät 8 verläuft die Datenleitung 6, welche im dargestellten Ausführungsbeispiel aus mehreren Segmenten 6.1, 6.2, 6.2, 6.4 und 6.5 aufgebaut ist. Zwischen den jeweiligen Segmenten befinden sich Steckverbindungen 7.1, 7.2, 7.3 und 7.4. Die einzelnen Segmente 6.1... 6.5 der Datenleitung 6 sind beispielsweise entlang einzelner Segmente oder Bauteile des Flurförderzeugs 22 verlegt. So kann sich beispielsweise ein Segment entlang eines Teils des Hubgerüsts erstrecken, welches in einem separaten Herstellungsschritt vorgefertigt wird. Anschließend werden solche Module oder Bauteile des Flurförderzeugs 22 oftmals mit anderen Modulen oder Bauteilen modular kombiniert, die entsprechenden Segmente 6.1... 6.5 der Datenleitungen müssen bei der Montage lediglich über die Steckverbindungen 7.1 .. 7.4 miteinander verbunden werden. Dies erlaubt eine einfache und flexible weil modulare Montage des Flurförderzeugs 22. Die Menge des Segments 6.1 beträgt beispielhaft 0,5 m, die Länge des Segments 6.2 beispielhaft 3,5 m, die Länge des Segments 6.3 beispielhaft 5 m, die Länge des Segments 6.4 beispielhaft 19,5 m und die Länge des Segments 6.5 beispielhaft 1,5 m. Bauteile des Flurförderzeugs 22, für die einzelne Segmente vorgesehen sein können, sind beispielsweise die Fahrerkabine, das Chassis, eine Schubvorrichtung für ein Hubgerüst, das Hubgerüst bzw. Segmente des Hubgerüsts oder die Gabel 28.

### Bezugszeichenliste

- 2: Ethernet-Kommunikationsvorrichtung
- 4: erstes Netzwerkgerät
- 6: Datenleitung
- 6.1, 6.2, 6.3, 6.4, 6.5: Segmente
- 7.1, 7.2, 7.3, 7.4: Steckverbindungen
- 8: zweites Netzwerkgerät
- 10: erste Sende-Empfangseinheit
- 12: zweite Sende-Empfangseinheit
- 14: erster Speicher
- 16: erster Mixer
- 18: zweiter Speicher
- 20: zweiter Mixer
- 22: Flurförderzeug
- 24: Hubgerüst
- 26: Umlenkrolle
- 28: Gabel

- EC1: erste Echokompensationseinheit
- EC2: zweite Echokompensationseinheit
- TX1: erste Sendeeinheit
- TX2: zweite Sendeeinheit
- RX1: erster Empfänger
- RX2: zweiter Empfänger
- HY: Hybridadapter

## Patentansprüche

1. Flurförderzeug (22) mit einer Ethernet-Kommunikationsvorrichtung (2), die zumindest ein erstes Netzwerkgerät (4) und ein über eine Datenleitung (6) mit diesem verbundenes zweites Netzwerkgerät (8) umfasst, wobei die Datenleitung (6) ein Ethernet-Kabel mit einer einzigen verdrillten Doppelader ist, und wobei das erste Netzwerkgerät (4) eine erste Sende-Empfangseinheit (10) mit einer ersten Echokompensationseinheit (EC1) und das zweite Netzwerkgerät (8) eine zweite Sende-Empfangseinheit (12) mit einer zweiten Echokompensationseinheit (EC2) umfasst, wobei eine erste Sendeeinheit (TX1) der ersten Sende-Empfangseinheit (10) dazu eingerichtet ist, Daten über die Datenleitung (6) an einen zweiten Empfänger (RX2) der zweiten Sende-Empfangseinheit (12) zu senden und wobei eine zweite Sendeeinheit (TX2) der zweiten Sende-Empfangseinheit (12) dazu eingerichtet ist, Daten über die Datenleitung (6) an einen ersten Empfänger (RX1) der ersten Sende-Empfangseinheit (10) zu senden, **dadurch gekennzeichnet, dass** die erste Echokompensationseinheit (EC1) einen ersten Speicher (14) umfasst, der dazu eingerichtet ist, ein erstes Datensignal der von der ersten Sendeeinheit (TX1) an den zweiten Empfänger (RX2) gesendeten Daten zum Zweck der Echokompensation für länger als die Dauer eines Echointervalls zu speichern, wobei das Echointervall größer als 150 ns ist, eine Datenübertragungsgeschwindigkeit auf der Datenleitung (6) zumindest 100 Mbit/s beträgt und das Ethernet-Kabel ein unabgeschirmtes Kabel ist.

2. Flurförderzeug (22) nach Anspruch 1, **dadurch gekennzeichnet, dass** die zweite Echokompensationseinheit (EC2) einen zweiten Speicher (18) umfasst, der dazu eingerichtet ist, ein zweites Datensignal der von der zweiten Sendeeinheit (TX2) an den ersten Empfänger (RX1) gesendeten Daten zum Zweck der Echokompensation für mehr als die Dauer des Echointervalls zu speichern.

3. Flurförderzeug (22) nach Anspruch 1 oder 2, **dadurch gekennzeichnet, dass** das Echointervall größer als 160 ns, insbesondere größer als 170 ns, ferner insbesondere größer als 180 ns ist.

4. Flurförderzeug (22) nach Anspruch 1 oder 2, **dadurch gekennzeichnet, dass** das Echointervall
größer als 160 ns und kleiner als 380 ns,
größer als 170 ns und kleiner als 380 ns,
größer als 180 ns und kleiner als 380 ns,
größer als 160 ns und kleiner als 350 ns,
größer als 160 ns und kleiner als 330 ns,
größer als 160 ns und kleiner als 310 ns,
größer als 170 ns und kleiner als 350 ns, oder
größer als 180 ns und kleiner als 330 ns ist.

5. Flurförderzeug (22) nach einem der Ansprüche 1 bis 4, **dadurch gekennzeichnet, dass** das erste Netzwerkgerät (4) und das zweite Netzwerkgerät (8) direkt über die Datenleitung (6) miteinander verbunden sind und die Datenleitung (6) durch keine aktiven Netzwerkkomponenten unterbrochen ist, insbesondere keinen Repeater umfasst.

6. Flurförderzeug (22) nach einem der Ansprüche 1 bis 5, **dadurch gekennzeichnet, dass** eine Länge der Datenleitung (6) größer als 17 m und insbesondere kleiner als 31 m ist.

7. Flurförderzeug (22) nach einem der Ansprüche 1 bis 6, **dadurch gekennzeichnet, dass** die Datenleitung entlang eines beweglichen Hubgerüsts (24) des Flurförderzeugs (22) geführt ist.

8. Flurförderzeug (22) nach Anspruch 7, **dadurch gekennzeichnet, dass** das erste Netzwerkgerät (4) eine in einem Chassis des Flurförderzeugs (22) vorhandene Steuereinheit ist oder von der Steuereinheit umfasst ist und das zweite Netzwerkgerät (8) eine Einheit ist oder von einer Einheit umfasst ist, die in oder an einer an dem Hubgerüst (24) befestigten Gabel (28) oder einem an dem Hubgerüst (24) befestigten Gabelträger angeordnet ist, wobei das zweite Netzwerkgerät (8) insbesondere mit einer in oder an der Gabel (28) oder dem Gabelträger angeordneten Kamera verbunden ist oder von der Kamera umfasst ist.

9. Verfahren zum Betreiben einer Ethernet-Kommunikationsvorrichtung (2) in einem Flurförderzeug (22), die zumindest ein erstes Netzwerkgerät (4) und ein über eine Datenleitung (6) mit diesem verbundenes zweites Netzwerkgerät (8) umfasst, wobei die Datenleitung (6) ein Ethernet-Kabel mit einer einzigen verdrillten Doppelader ist, und wobei das erste Netzwerkgerät (4) eine erste Sende-Empfangseinheit (10) mit einer ersten Echokompensationseinheit (EC1) und das zweite Netzwerkgerät (8) eine zweite Sende-Empfangseinheit (12) mit einer zweiten Echokompensationseinheit (EC2) umfasst, wobei
eine erste Sendeeinheit (TX1) der ersten Sende-Empfangseinheit (10) Daten über die Datenleitung (6) an einen zweiten Empfänger (RX2) der zweiten Sende-Empfangseinheit (12) sendet und
eine zweite Sendeeinheit (TX2) der zweiten Sende-Empfangseinheit (12) Daten über die Datenleitung (6) an einen ersten Empfänger (RX1) der ersten Sende-Empfangseinheit (10) sendet,
**dadurch gekennzeichnet, dass**
die erste Echokompensationseinheit (EC1) einen ersten Speicher (14) umfasst, der ein erstes Datensignal der von der ersten Sendeeinheit (TX1) an den zweiten Empfänger (RX2) gesendeten Daten zum Zweck der Echokompensation speichert, wobei die erste Echokompensationseinheit (EC1) das Datensignal für länger als die Dauer eines Echointervalls speichert und das Echointervall größer als 150 ns ist, wobei
eine Datenübertragungsgeschwindigkeit auf der Datenleitung (6) zumindest 100 Mbit/s beträgt und die Daten über ein unabgeschirmtes Ethernet-Kabel übertragen werden.

10. Verfahren nach Anspruch 9, **dadurch gekennzeichnet, dass** die zweite Echokompensationseinheit (EC2) einen zweiten Speicher (18) umfasst, der ein zweites Datensignal der von der zweiten Sendeeinheit (TX2) an den ersten Empfänger (RX1) gesendeten Daten zum Zweck der Echokompensation für mehr als die Dauer des Echointervalls speichert.

11. Verfahren nach Anspruch 9 oder 10, **dadurch gekennzeichnet, dass** das Echointervall größer als 160 ns, insbesondere größer als 170 ns, ferner insbesondere größer als 180 ns ist.

12. Verfahren nach Anspruch 9 oder 10, **dadurch gekennzeichnet, dass** das Echointervall
größer als 160 ns und kleiner als 380 ns,
größer als 170 ns und kleiner als 380 ns,
größer als 180 ns und kleiner als 380 ns,
größer als 160 ns und kleiner als 350 ns,
größer als 160 ns und kleiner als 330 ns,
größer als 160 ns und kleiner als 310 ns,
größer als 170 ns und kleiner als 350 ns, oder
größer als 180 ns und kleiner als 330 ns ist.

13. Verfahren nach einem der Ansprüche 9 bis 12, **dadurch gekennzeichnet, dass** die Daten von dem ersten Netzwerkgerät (4) direkt zu dem zweiten Netzwerkgerät (8) über die Datenleitung (6) versendet werden und die über die Datenleitung kommunizierten Daten keine aktiven Netzwerkkomponenten durchlaufen, insbesondere keinen Repeater durchlaufen.

## Claims

1. An industrial truck (22) with an ethernet communication device (2) which comprises at least one first network device (4) and a second network device (8) connected to the latter via a data link (6), wherein the data link (6) is an ethernet cable with a single twisted pair, and wherein the first network device (4) comprises a first transceiver unit (10) having a first echo compensation unit (EC1) and the second network device (8) comprises a second transceiver unit (12) having a second echo compensation unit (EC2), wherein a first transmitting unit (TX1) of the first transceiver unit (10) is configured to transmit data via the data link (6) to a second receiver (RX2) of the second transceiver unit (12) and wherein a second transmitting unit (TX2) of the second transceiver unit (12) is configured to transmit data via the data link (6) to a first receiver (RX1) of the first transceiver unit (10), **characterized in that** the first echo compensation unit (EC1) comprises a first memory (14) which is configured to store a first data signal of the data transmitted by the first transmitting unit (TX1) to the second receiver (RX2) for the purpose of echo compensation for longer than the duration of an echo interval, wherein the echo interval is greater than 150 ns, a data transfer rate on the data link (6) is at least 100 Mbit/s and the ethernet cable is an unshielded cable.

2. The industrial truck (22) according to Claim 1, **characterized in that** the second echo compensation unit (EC2) comprises a second memory (18) which is configured to store a second data signal of the data transmitted by the second transmitting unit (TX2) to the first receiver (RX1) for the purpose of echo compensation for more than the duration of the echo interval.

3. The industrial truck (22) according to Claim 1 or 2, **characterized in that** the echo interval is greater than 160 ns, in particular greater than 170 ns, additionally in particular greater than 180 ns.

4. The industrial truck (22) according to Claim 1 or 2, **characterized in that** the echo interval is
greater than 160 ns and less than 380 ns,
greater than 170 ns and less than 380 ns,
greater than 180 ns and less than 380 ns,
greater than 160 ns and less than 350 ns,
greater than 160 ns and less than 330 ns,
greater than 160 ns and less than 310 ns,
greater than 170 ns and less than 350 ns, or
greater than 180 ns and less than 330 ns.

5. The industrial truck (22) according to any one of Claims 1 to 4, **characterized in that** the first network device (4) and the second network device (8) are directly connected to one another via the data link (6) and the data link (6) is not interrupted by any active network components, in particular does not comprise any repeaters.

6. The industrial truck (22) according to any one of Claims 1 to 5, **characterized in that** a length of the data link (6) is greater than 17 m and in particular less than 31 m.

7. The industrial truck (22) according to any one of Claims 1 to 6, **characterized in that** the data link is guided along a movable lifting frame (24) of the industrial truck (22).

8. The industrial truck (22) according to Claim 7, **characterized in that** the first network device (4) is a control unit provided in a chassis of the industrial truck (22) or is comprised by the control unit and the second network device (8) is a unit or is comprised by a unit, which is arranged in or on a fork (28) mounted to the lifting frame (24) or a fork carriage mounted to the lifting frame (24), wherein the second network device (8) is in particular linked to a camera arranged in or on the fork (28) or the fork carriage or is comprised by the camera.

9. A method of operating an ethernet communication device (2) in an industrial truck (22), which comprises at least one first network device (4) and a second network device (8) connected to the latter via a data link (6), wherein the data link (6) is an ethernet cable having a single twisted pair, and wherein the first network device (4) comprises a first transceiver unit (10) having a first echo compensation unit (EC1) and the second network device (8) comprises a second transceiver unit (12) having a second echo compensation unit (EC2), wherein
a first transmitting unit (TX1) of the first transceiver unit (10) transmits data via the data link (6) to a second receiver (RX2) of the second transceiver unit (12) and
a second transmitting unit (TX2) of the second transmitting-receiving unit (12) transmits data via the data link (6) to a first receiver (RX1) of the first transmitting-receiving unit (10),
**characterized in that**
the first echo compensation unit (EC1) comprises a first memory (14), which stores a first data signal of the data transmitted by the first transmitting unit (TX1) to the second receiver (RX2) for the purpose of echo compensation, wherein the first echo compensation unit (EC1) stores the data signal for longer than the duration of an echo interval and the echo interval is greater than 150 ns, wherein
a data transfer rate on the data link (6) is at least 100 Mbit/s and the data is transmitted via an unshielded ethernet cable.

10. The method according to Claim 9, **characterized in that** the second echo compensation unit (EC2) comprises a second memory (18), which stores a second data signal of the data transmitted by the second transmitting unit (TX2) to the first receiver (RX1) for the purpose of echo compensation for more than the duration of the echo interval.

11. The method according to Claim 9 or 10, **characterized in that** the echo interval is greater than 160 ns, in particular greater than 170 ns, additionally in particular greater than 180 ns.

12. The method according to Claim 9 or 10, **characterized in that** the echo interval is
greater than 160 ns and less than 380 ns,
greater than 170 ns and less than 380 ns,
greater than 180 ns and less than 380 ns,
greater than 160 ns and less than 350 ns,
greater than 160 ns and less than 330 ns,
greater than 160 ns and less than 310 ns,
greater than 170 ns and less than 350 ns, or
greater than 180 ns and less than 330 ns.

13. The method according to one of Claims 9 to 12, **characterized in that** the data is sent by the first network device (4) directly to the second network device (8) via the data link (6) and the data communicated via the data link does not pass through any active network components, in particular do not pass through any repeaters.

## Revendications

1. Chariot de manutention (22) doté d'un dispositif de communication Ethernet (2), qui comprend au moins un premier appareil de réseau (4) et un deuxième appareil de réseau (8) relié à celui-ci par une ligne de données (6), la ligne de données (6) étant un câble Ethernet avec une seule paire torsadée, et dans lequel le premier appareil de réseau (4) comprend une première unité (10) d'émission-réception avec une première unité (EC1) de compensation d'écho et le deuxième appareil de réseau (8) comprend une deuxième unité (12) d'émission-réception avec une deuxième unité (EC2) de compensation d'écho, une première unité d'émission (TX1) de la première unité (10) d'émission-réception étant adaptée à cet effet, d'envoyer des données par la ligne de données (6) à un deuxième récepteur (RX2) de la deuxième unité (12) d'émission-réception et une deuxième unité d'émission (TX2) de la deuxième unité (12) d'émission-réception étant conçue pour envoyer des données par la ligne de données (6) à un premier récepteur (RX1) de la première unité (10) d'émission-réception, **caractérisée en ce que** la première unité (EC1) de compensation d'écho comprend une première mémoire (14), qui est adaptée pour stocker un premier signal de données des données envoyées par la première unité d'émission (TX1) au deuxième récepteur (RX2) dans le but de compenser l'écho pendant une durée supérieure à la durée d'un intervalle d'écho, l'intervalle d'écho étant supérieur à 150 ns, une vitesse de transmission de données sur la ligne de données (6) étant d'au moins 100 Mbit/s et le câble Ethernet étant un câble non blindé.

2. Chariot de manutention (22) selon la revendication 1, **caractérisé en ce que** la deuxième unité (EC2) de compensation d'écho comprend une deuxième mémoire (18) adaptée pour stocker un deuxième signal de données des données envoyées par la deuxième unité d'émission (TX2) au premier récepteur (RX1) dans le but d'annuler l'écho pendant plus que la durée de l'intervalle d'écho.

3. Chariot de manutention (22) selon la revendication 1 ou 2, **caractérisé en ce que** l'intervalle d'écho est supérieur à 160 ns, notamment supérieur à 170 ns, en outre notamment supérieur à 180 ns.

4. Chariot de manutention (22) selon la revendication 1 ou 2, **caractérisé en ce que** l'intervalle d'écho est
supérieur à 160 ns et inférieur à 380 ns,
supérieur à 170 ns et inférieur à 380 ns,
supérieur à 180 ns et inférieur à 380 ns,
supérieur à 160 ns et inférieur à 350 ns,
supérieur à 160 ns et inférieur à 330 ns,
supérieur à 160 ns et inférieur à 310 ns,
supérieur à 170 ns et inférieur à 350 ns, ou
supérieur à 180 ns et inférieur à 330 ns.

5. Chariot de manutention (22) selon l'une des revendications 1 à 4, **caractérisé en ce que** le premier appareil de réseau (4) et le deuxième appareil de réseau (8) sont directement reliés entre eux par la ligne de données (6) et **en ce que** la ligne de données (6) n'est interrompue par aucun composant de réseau actif, en particulier ne comprend pas de répéteur.

6. Chariot de manutention (22) selon l'une des revendications 1 à 5, **caractérisé en ce qu'**une longueur de la ligne de données (6) est supérieure à 17 m et notamment inférieure à 31 m.

7. Chariot de manutention (22) selon l'une des revendications 1 à 6, **caractérisé en ce que** la ligne de données est guidée le long d'un mât mobile (24) du chariot de manutention (22).

8. Chariot de manutention (22) selon la revendication 7, **caractérisé en ce que** le premier dispositif de réseau (4) est une unité de commande présente dans un châssis du chariot de manutention (22) ou est compris par l'unité de commande et le deuxième dispositif de réseau (8) est une unité ou est compris par une unité, qui est disposée dans ou sur une fourche (28) fixée au mât (24) ou un tablier de fourche fixé au mât (24), le deuxième appareil de réseau (8) étant notamment relié à une caméra disposée dans ou sur la fourche (28) ou le tablier de fourche ou étant compris par la caméra.

9. Procédé d'exploitation d'un dispositif de communication Ethernet (2) dans un chariot de manutention (22), qui comprend au moins un premier appareil de réseau (4) et un deuxième appareil de réseau (8) relié à celui-ci par une ligne de données (6), la ligne de données (6) étant un câble Ethernet avec une seule paire torsadée, et dans lequel le premier appareil de réseau (4) comprend une première unité (10) d'émission-réception avec une première unité (EC1) de compensation d'écho et le deuxième appareil de réseau (8) comprend une deuxième unité (12) d'émission-réception avec une deuxième unité (EC2) de compensation d'écho,
une première unité d'émission (TX1) de la première unité (10) d'émission-réception envoyant des données par la ligne de données (6) à un deuxième récepteur (RX2) de la deuxième unité (12) d'émission-réception et
une deuxième unité d'émission (TX2) de la deuxième unité (12) d'émission-réception envoyant des données par la ligne de données (6) à un premier récepteur (RX1) de la première unité (10) d'émission-réception,
**caractérisé en ce que**
la première unité (EC1) de compensation d'écho comprend une première mémoire (14), qui stocke un premier signal de données des données envoyées par la première unité d'émission (TX1) au deuxième récepteur (RX2) dans le but de compenser l'écho, la première unité (EC1) de compensation d'écho stockant le signal de données pendant une durée supérieure à la durée d'un intervalle d'écho et l'intervalle d'écho étant supérieur à 150 ns,
une vitesse de transmission de données sur la ligne de données (6) étant d'au moins 100 Mbit/s et les données étant transmises par un câble Ethernet non blindé.

10. Procédé selon la revendication 9, **caractérisé en ce que** la deuxième unité (EC2) de compensation d'écho comprend une deuxième mémoire (18) qui stocke un deuxième signal de données des données envoyées par la deuxième unité d'émission (TX2) au premier récepteur (RX1) dans le but d'annuler l'écho pendant plus que la durée de l'intervalle d'écho.

11. Procédé selon la revendication 9 ou 10, **caractérisé en ce que** l'intervalle d'écho est supérieur à 160 ns, en particulier supérieur à 170 ns, encore plus particulièrement supérieur à 180 ns.

12. Procédé selon la revendication 9 ou la revendication 10, **caractérisé en ce que** l'intervalle d'écho est
supérieur à 160 ns et inférieur à 380 ns,
supérieur à 170 ns et inférieur à 380 ns,
supérieur à 180 ns et inférieur à 380 ns,
supérieur à 160 ns et inférieur à 350 ns,
supérieur à 160 ns et inférieur à 330 ns,
supérieur à 160 ns et inférieur à 310 ns,
supérieur à 170 ns et inférieur à 350 ns, ou
supérieur à 180 ns et inférieur à 330 ns.

13. Procédé selon l'une quelconque des revendications 9 à 12, **caractérisé en ce que** les données sont envoyées directement du premier dispositif de réseau (4) au deuxième dispositif de réseau (8) via la ligne de données (6) et **en ce que** les données communiquées via la ligne de données ne traversent pas de composants de réseau actifs, en particulier ne traversent pas de répéteur.
